# DEMANDE DE BREVET EUROPEEN

(11) **EP 1 493 903 A1**
(43) Date de publication de la demande: **05.01.2005**
(21) Numéro de dépôt: 03710089.8
(22) Date de dépôt: 07.04.2003
(51) Int. Cl.: F01M 11/03, F01M 5/00, F28D 9/00, B01D 35/18

(54) **ECHANGEUR DE CHALEUR A PLAQUES EMPILEES, EN PARTICULIER POUR HUILE DE MOTEUR**

(30) Priorité: 10.04.2002 ES 200200828
(71) Demandeur: Valeo Termico S.A., 50011 Saragosse (ES)
(72) Inventeur: CORREAS, Luis, E-Saragosse (ES); PERRIN, Patrick, F-21110 Genlis (FR)
(74) Mandataire: Rolland, Jean-Christophe
(86) Numéro de dépôt international: PCT/IB2003/001259
(87) Numéro de publication internationale: WO 2003/085240

(57) **Abrégé**

Il comprend une pluralité de plaques (2) empilées entre lesquelles circulent le liquide à refroidir et le liquide de refroidissement dans deux circuits indépendants définis par lesdites plaques (2), lequel échangeur (1) comprend également un filtre (3), caractérisé en ce que le filtre (3) est disposé dans une cavité définie par des orifices (10) formés dans les plaques (2), ledit filtre (3) étant introduit partiellement ou complètement dans ladite cavité.

On parvient ainsi à éliminer la carcasse du filtre, dans la mesure où l'échangeur fait office de carcasse pour le filtre. De plus, le fait que le filtre est complètement ou partiellement introduit dans les plaques de l'échangeur permet de réduire le volume, et donc le poids mais aussi le coût de fabrication.

## Description

La présente invention concerne un échangeur de chaleur à plaques empilées, en particulier pour huile de moteur, doté d'un filtre intégré.

### ARRIERE-PLAN DE L'INVENTION

On connaît des échangeurs de chaleur, en particulier pour huile de moteur, comprenant une pluralité de plaques empilées entre lesquelles circulent le liquide à refroidir et le liquide de refroidissement dans deux circuits indépendants définis pour lesdites plaques.

Lesdits échangeurs de chaleur, appelés échangeurs huile-eau, peuvent être accouplés à un filtre à huile de différentes manières :

On connaît, d'une part, des échangeurs de chaleur disposés de façon contiguë au filtre dans des carcasses indépendantes. Le filtre est fixé à l'échangeur de manière amovible au moyen d'un goujon fixé au bloc-moteur. Lorsqu'il faut remplacer le filtre à huile lors de la vidange de l'huile du moteur, la fixation audit goujon est desserrée et le filtre est retiré conjointement avec sa carcasse.

On connaît d'autre part des échangeurs de chaleur disposés de façon contiguë au filtre dans une même carcasse. La demande de brevet EP-A-0801283 concerne un échangeur d'huile solidaire d'une carcasse abritant un filtre, intégrant dans un même corps les fonctions de refroidissement et de filtrage. Comme le filtre est disposé à la suite des plaques empilées constituant l'échangeur, l'ensemble occupe un volume considérable.

Il s'est avéré, dans la pratique, que les conceptions connues d'échangeurs de chaleur à filtre à huile intégré étaient mises en oeuvre en éliminant une des deux carcasses, ou bien en éliminant les moyens d'assemblage du filtre et de l'échangeur. Il n'est toutefois pas possible d'intégrer le filtre et l'échangeur dans une carcasse unique sans utiliser de moyens de couplage entre ceux-ci.

### DESCRIPTION DE L'INVENTION

L'échangeur de chaleur à plaques empilées, en particulier pour huile de moteur, de la présente invention a pour but de remédier aux inconvénients des échangeurs connus dans la technique; en offrant une série d'avantages qui seront décrits par la suite.

L'échangeur de chaleur à plaques empilées, en particulier pour huile de moteur, objet de la présente invention, est caractérisé en ce que le filtre est disposé dans une cavité définie par des orifices formés dans les plaques, ledit filtre étant introduit partiellement ou complètement dans ladite cavité.

Cette caractéristique permet d'intégrer les fonctions de refroidissement et de filtrage de l'huile du moteur dans un corps unique.

On parvient ainsi à éliminer la carcasse du filtre, dans la mesure où l'échangeur fait office de carcasse pour le filtre. De plus, le fait que le filtre est complètement ou partiellement introduit dans les plaques de l'échangeur permet de réduire le volume, et donc le poids mais aussi le coût de fabrication.

On obtient par ailleurs une réduction des pertes de pression en raison de la plus grande simplicité du circuit de circulation de l'huile à refroidir et du liquide de refroidissement.

Comme on l'a indiqué, le fluide peut occuper toute la cavité ou bien dépasser de celle-ci du dessus comme du dessous.

Le filtre est de préférence placé perpendiculairement aux plaques, bien qu'il puisse occuper d'autres positions comme une position horizontale ou inclinée par rapport auxdites plaques.

La position de l'ensemble de l'échangeur par rapport au bloc-moteur est indifférente, celui-ci pouvant être placé dans une position verticale, horizontale ou inclinée.

Les plaques comprennent avantageusement des protubérances maintenant la distance entre deux plaques contiguës et constituant des points de soudage. Cette caractéristique permet d'améliorer le montage des plaques et d'en renforcer l'assemblage.

Lesdites protubérances peuvent présenter une forme quelconque, bien qu'elles présentent de préférence un contour circulaire.

Selon un mode de réalisation de la présente invention, lesdites protubérances présentent un diamètre d'au moins 2 mm, de préférence de 3 mm.

De plus, lesdites protubérances sont séparées d'une distance comprise entre 10 mm et 20 mm, de préférence de 15 mm.

Avantageusement, l'échangeur comprend des moyens perturbant le flux permettant d'accroître le transfert de chaleur.

Lesdits moyens perturbant le flux sont de préférence définis par des ondulations prévues dans les plaques.

De cette manière, les plaques peuvent présenter des ondulations ou des protubérances, ou bien un type quelconque d'éléments perturbant le flux situés entre deux plaques, de façon à assurer un transfert adéquat de chaleur entre les plaques et les deux fluides circulant entre elles.

Avantageusement, chaque plaque comprend un orifice de sortie du liquide à refroidir qui assure également la fonction de cavité pour la mise en place du filtre. De cette manière, le filtre se trouve parfaitement centré dans l'orifice de sortie du liquide à refroidir en permettant l'accès homogène dudit liquide autour de celui-ci.

Selon un mode de réalisation de l'invention, chaque plaque comprend au moins un orifice d'entrée du liquide de refroidissement, disposé à une extrémité de la plaque, contiguë à la cavité du filtre. Cette caractéristique permet au liquide de refroidissement de s'écouler autour du filtre, en donnant ainsi lieu à une bonne répartition pour couvrir ainsi une plus grande surface de la plaque.

Chaque plaque comprend de préférence un orifice d'entrée du liquide à refroidir disposé à l'extrémité opposée à l'orifice de sortie du liquide à refroidir. On obtient ainsi une meilleure circulation à travers la plaque de façon à parvenir à un refroidissement approprié de ladite huile avant que celle-ci ne traverse le filtre.

Chaque plaque comprend de préférence un orifice de sortie du liquide de refroidissement disposé entre les deux orifices d'entrée et de sortie du liquide à refroidir, et aligné avec ceux-ci.

De cette manière, on parvient à une meilleure distribution de l'huile sur la plaque, dans la mesure où, lorsque le flux du liquide à refroidir percute ledit conduit de sortie du liquide de refroidissement, il a tendance à le contourner en couvrant une plus grande surface de la plaque et en transférant ainsi davantage de chaleur. De même, le fait que ledit conduit de sortie du liquide de refroidissement soit aligné avec les deux conduits d'entrée et de sortie du liquide à refroidir permet au flux du liquide à refroidir d'entourer le filtre et de pénétrer de façon homogène.

Le liquide à refroidir et à filtrer est de préférence de l'huile de moteur.

Il est bien entendu que l'huile n'est pas le seul fluide qui nécessite un conditionnement en température et une filtration dans un véhicule, puisque le liquide à refroidir peut également être le liquide de la direction assistée d'un véhicule ou bien le combustible d'un véhicule.

L'échangeur réalise avantageusement la fonction de régulation de la température, ce qui permet aussi bien de réfrigérer que de chauffer un liquide.

### BREVE DESCRIPTION DES DESSINS

Dans le but de faciliter la description de ce qui a été exposé ci-dessus, on joint des dessins représentant, de façon schématique et à titre d'exemple non limitatif, un cas pratique de réalisation de l'échangeur de chaleur à plaques empilées, en particulier pour huile de moteur, de l'invention, dessins dans lesquels :
la figure 1 est une vue éclatée de l'ensemble de l'échangeur de chaleur doté du filtre intégré ;
la figure 2 est une vue en élévation en coupe longitudinale de l'ensemble monté de l'échangeur de chaleur doté du filtre intégré ;
la figure 3 est une vue en plan d'une plaque de l'échangeur de chaleur ; et
la figure 4 est une vue en élévation d'une plaque de l'échangeur de chaleur.

### DESCRIPTION D'UN MODE DE REALISATION PREFERE

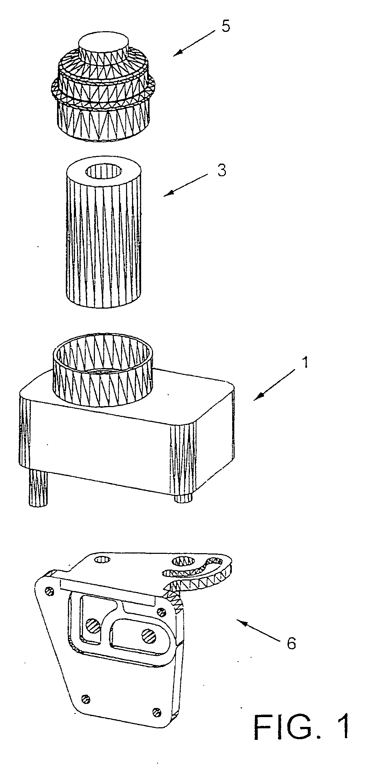

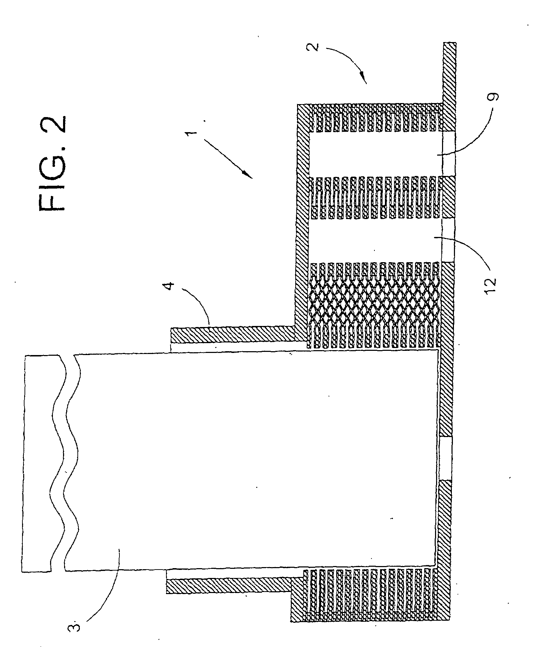

Comme on peut le voir dans les figures 1 et 2, l'échangeur de chaleur 1 à plaques empilées 2 pour huile de moteur, doté d'un filtre intégré 3, comprend une pluralité de plaques 2 d'aluminium empilées les unes sur les autres. Dans les circuits ou les espaces définis entre deux plaques 2 successives circulent alternativement l'huile de moteur à refroidir et le liquide de refroidissement, par exemple de l'eau, de façon à ce qu'un fluide circule dans un premier espace entre plaques et que l'autre fluide circule dans l'espace contigu entre plaques, et ainsi successivement.

La plaque supérieure comprend une ouverture 4 pour permettre d'accéder au filtre 3 en vue de son entretien et de son remplacement.

L'échangeur comprend également un bouchon 5 pour couvrir la partie du filtre 3 qui dépasse, en assurant ainsi une étanchéité adéquate.

L'entrée et la sortie de l'huile ainsi que du liquide de refroidissement s'effectuent à partir de la plaque inférieure de l'échangeur, ladite partie inférieure de l'échangeur étant couplée au bloc-moteur au moyen d'un élément de connexion.

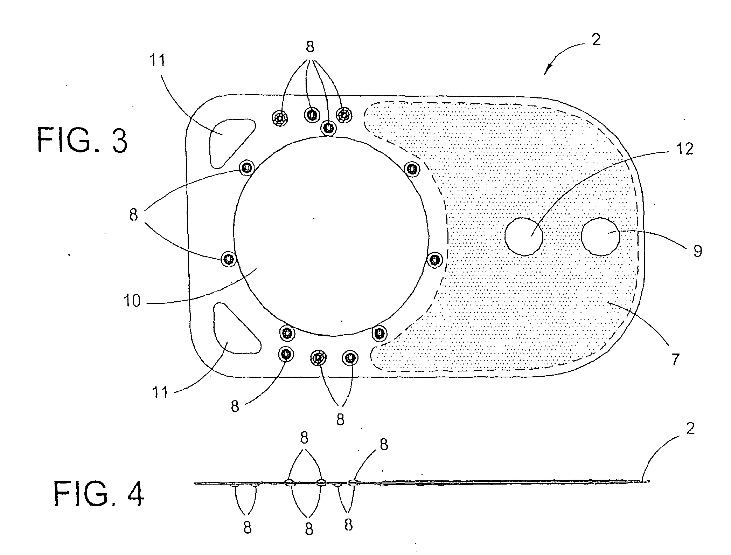

Comme on le peut le voir dans la figure 3, les plaques 2 présentent une zone de perturbation du flux 7 comprenant des éléments perturbateurs (non représentés), comme des ondulations, afin d'accroître le transfert de chaleur et d'offrir des points de contact entre les plaques 2 par soudage.

Les plaques 2 comprennent également une pluralité de protubérances 8 adéquatement situées autour de l'orifice de mise en place du filtre 3, de façon à maintenir la distance correcte entre les plaques 2 et également pour améliorer le comportement mécanique des éléments perturbateurs dans les zones libres, comme le montrent les figures 3 et 4.

Chaque plaque 2 comprend un orifice d'entrée 9 et un autre orifice de sortie 10 pour l'huile, et deux orifices d'entrée 11 et un de sortie 12 pour le liquide de refroidissement, formant respectivement les conduits d'entrée et de sortie de l'huile et du liquide de refroidissement.

D'une part, ladite ouverture 4 à l'intérieur de laquelle le filtre 3 est mis en place assure également la fonction de conduit de sortie 10 de l'huile. Le filtre 3 est placé exactement au centre de l'intérieur dudit orifice 10 pour faciliter le passage du flux d'huile autour de son contour.

L'orifice d'entrée 9 de l'huile est situé à l'extrémité opposée à l'orifice de sortie 10 de l'huile et est aligné avec celui-ci, pour donner lieu à une meilleur circulation à travers la plaque 2.

D'autre part, les deux orifices d'entrée 11 du liquide de refroidissement sont disposés à une extrémité de la plaque 2, à proximité du filtre 3 d'huile, ce qui permet au liquide de refroidissement de s'écouler autour dudit filtre 3 et donc de bein se répartir, pour couvrir ainsi une plus grande surface de la plaque 2.

Le conduit de sortie 12 du liquide de refroidissement est disposé au milieu, entre les deux conduits d'entrée 9 et de sortie 10 de l'huile, et est aligné avec ceux-ci. Cette caractéristique permet d'obtenir une meilleure distribution de l'huile sur la plaque 2, dans la mesure où, lorsque le flux d'huile percute ledit conduit de sortie 12 du liquide de refroidissement, il a tendance à le contourner en couvrant une plus grande surface de la plaque et en transférant ainsi davantage de chaleur ; et le fait qu'il soit aligné permet au flux d'huile d'entourer le filtre et de pénétrer de façon homogène.

Comme on l'a indiqué, l'huile de moteur traverse l'échangeur de chaleur 1 en circulant alternativement entre deux plaques 2 successives, tandis que le liquide de refroidissement circule entre les plaques restantes 2, si bien que l'huile dissipe de la chaleur vers le liquide de refroidissement. Par la suite, l'huile refroidie traverse le filtre 3 fabriqué en papier, portant également le nom d'éco-filtre, en sortant ainsi filtrée par la partie inférieure de l'échangeur 1, avant d'être réintroduite dans le moteur. Ledit éco-filtre, une fois remplacé par un autre, peut être recyclé, contribuant ainsi à la protection du milieu ambiant.

On obtient par conséquent un échangeur de chaleur 1 à plaques empilées 2 pouvant présenter une forme extérieure quelconque, comme une forme carrée, arrondie, etc., doté d'un filtre intégré 3 de préférence cylindrique, lequel est disposé perpendiculairement aux plaques 2, et est introduit partiellement à l'intérieur dudit échangeur de chaleur 1.

Selon d'autres aspects de l'invention, il est possible de réaliser d'autres configurations des orifices d'entrée et de sortie, pour offrir différentes distributions du flux d'huile et de liquide de refroidissement, respectivement.

Les plaques peuvent être soit ondulées, comme on l'a décrit précédemment, soit lisses avec des moyens perturbateurs permettant d'augmenter la turbulence et donc le transfert de chaleur.

Les matériaux utilisés dans la fabrication des éléments constitutifs de l'échangeur de chaleur à plaques empilées, en particulier pour huile de moteur, qui a été décrit, ainsi que leurs formes et dimensions et tous les détails accessoires susceptibles de se présenter sont indépendants de l'objet de la présente invention, et peuvent être remplacés par d'autres équivalents techniques, à condition qu'ils ne portent pas atteinte à son essence et ne s'écartent pas du cadre défini par les revendications qui suivent.

## Revendications

1. Echangeur de chaleur (1) à plaques (2) empilées, en particulier pour huile de moteur, comprenant une pluralité de plaques (2) empilées entre lesquelles circulent le liquide à refroidir et le liquide de refroidissement dans deux circuits indépendants définis par lesdites plaques (2), lequel échangeur (1) comprend également un filtre (3), **caractérisé en ce que** le filtre (3) est disposé dans une cavité définie par des orifices (10) formés dans les plaques (2), ledit filtre (3) étant introduit partiellement ou complètement dans ladite cavité.

2. Echangeur (1) selon la revendication 1, **caractérisé en ce que** les plaques (2) comprennent des protubérances (8) maintenant la distance entre deux plaques (2) contiguës et constituant des points de soudage.

3. Echangeur (1) selon la revendication 2, **caractérisé en ce que** les protubérances (8) présentent un diamètre d'au moins 2 mm, de préférence de 3 mm.

4. Echangeur (1) selon l'une quelconque des revendications 2 ou 3, **caractérisé en ce que** les protubérances (8) sont séparées d'une distance comprise entre 10 mm et 20 mm, de préférence de 15 mm.

5. Echangeur (1) selon la revendication 1, **caractérisé en ce qu'**il comprend des moyens (7) perturbant le flux permettant d'accroître le transfert de chaleur.

6. Echangeur (1) selon la revendication 5, **caractérisé en ce que** les moyens (7) perturbant le flux sont définis par des ondulations prévues dans les plaques (2).

7. Echangeur (1) selon la revendication 1, **caractérisé en ce que** chaque plaque (2) comprend un orifice de sortie (10) du liquide à refroidir qui assure également la fonction de cavité pour la mise en place du filtre (3).

8. Echangeur (1) selon la revendication 7, **caractérisé en ce que** chaque plaque (2) comprend au moins un orifice d'entrée (11) du liquide de refroidissement, disposé à une extrémité de la plaque (2), contiguë à la cavité (10) du filtre (3).

9. Echangeur (1) selon l'une quelconque des revendications 7 et 8, **caractérisé en ce que** chaque plaque (2) comprend un orifice d'entrée (9) du liquide à refroidir disposé à l'extrémité opposée à l'orifice de sortie (10) du liquide à refroidir.

10. Echangeur (1) selon l'une quelconque des revendications 7 à 9, **caractérisé en ce que** chaque plaque (2) comprend un orifice de sortie (12) du liquide de refroidissement disposé entre les deux orifices d'entrée (9) et de sortie (10) du liquide à refroidir, et aligné avec ceux-ci.

11. Echangeur (1) selon la revendication 1, **caractérisé en ce que** le liquide à refroidir et à filtrer est de l'huile de moteur.

12. Echangeur (1) selon la revendication 1, **caractérisé en ce que** le liquide à refroidir et à filtrer est le liquide de la direction assistée d'un véhicule.

13. Echangeur (1) selon la revendication 1, **caractérisé en ce que** le liquide à refroidir et à filtrer est le combustible d'un véhicule.

14. Echangeur (1) selon la revendication 1, **caractérisé en ce qu'**il réalise la fonction de régulation de la température, ce qui permet aussi bien de réfrigérer que de chauffer un liquide.
